# EUROPÄISCHE PATENTSCHRIFT

(11) **EP 3 161 294 B1**
(45) Veröffentlichungstag und Bekanntmachung des Hinweises auf die Patenterteilung: **06.06.2018**
(21) Anmeldenummer: 15731502.9
(22) Anmeldetag: 31.03.2015
(51) Int. Cl.: F02D 13/02, F01L 1/344

(54) **NOCKENWELLENVERSTELLER UND VERFAHREN ZUR BESTIMMUNG DER EINSTELLUNG EINES NOCKENWELLENVERSTELLERS**
CAMSHAFT PHASING DEVICE AND METHOD FOR DETERMINING SETTING OF THE PHASING DEVICE
DÉPHASEUR D'ARBRE À CAMES ET PROCÉDÉ DE DÉTERMINATION DE LA POSITION DU DÉPHASEUR

(30) Priorität: 26.06.2014 DE 102014212319
(43) Veröffentlichungstag der Anmeldung: 03.05.2017
(73) Patentinhaber: Schaeffler Technologies AG & Co. KG, 91074 Herzogenaurach (DE)
(72) Erfinder: BRAUN, Wolfgang, 97493 Garstadt (DE); HEIM, Jens, 97493 Bergrheinfeld (DE); SCHÄFER, Jens, 91074 Herzogenaurach (DE); THÖLKE, Andreas, 90480 Nürnberg (DE)
(86) Internationale Anmeldenummer: PCT/DE2015/200221
(87) Internationale Veröffentlichungsnummer: WO 2015/197054

(56) Entgegenhaltungen:
- WO-A1-2005/111383
- DE-A1-102012 213 539

## Beschreibung

Die Erfindung betrifft einen zur Verstellung des Phasenwinkels zwischen einer Kurbelwelle und einer Nockenwelle einer Brennkraftmaschine vorgesehenen Nockenwellenversteller. Ferner betrifft die Erfindung ein Verfahren, mit welchem die Einstellung eines solchen Nockenwellenverstellers detektierbar ist.

Ein Verfahren zur Bestimmung der Phasenlage einer verstellbaren Nockenwelle ist beispielsweise aus der DE 10 2012 213 539 A1 bekannt. Im Rahmen dieses Verfahrens werden verschiedene Messvorrichtungen genutzt, welche einerseits an der Nockenwelle und andererseits an der Kurbelwelle einer Brennkraftmaschine angeordnet sind. In entsprechender Weise arbeitet auch ein in der DE 101 08 055 C1 offenbartes Verfahren zum Steuern einer Brennkraftmaschine mit Kurbelwellen- und Nockenwellen-Sensoren.

Der Erfindung liegt die Aufgabe zugrunde, die Einstellung eines Nockenwellenverstelters einer Brennkraftmaschine gegenüber dem genannten Stand der Technik auf besonders einfache, robuste Art zu bestimmen, wobei eine Messung sowohl bei stehender als auch bei laufender Brennkraftmaschine möglich ist.

Diese Aufgabe wird erfindungsgemäß gelöst durch einen Nockenwellenversteller mit den Merkmalen des Anspruchs 1 sowie durch ein Verfahren zur Messung der Einstellung eines Nockenwellenverstellers, das heißt zur Bestimmung des Phasenwinkels zwischen Nockenwelle und Kurbelwelle einer Brennkraftmaschine, gemäß Anspruch 10. Im Folgenden im Zusammenhang mit dem Messverfahren erläuterte Ausgestaltungen und Vorteile der Erfindung gelten sinngemäß auch für die Vorrichtung, das heißt den Nockenwellenversteller, und umgekehrt.

Der Nockenwellenversteller dient in an sich bekannter Weise der Verstellung des Phasenwinkels zwischen einer Kurbelwelle und einer Nockenwelle einer Brennkraftmaschine, wobei ein Verstellmodul des Nockenwellenverstellers mittels eines Aktors, insbesondere eines Elektromotors oder eines hydraulischen Elements, betätigbar ist.

Das Verstellmodul umfasst ein durch die Kurbelwelle, beispielsweise über einen Ketten- oder Riementrieb, antreibbares Antriebselement, sowie ein relativ zum Antriebselement beschränkt verdrehbares, mit einer Nockenwelle der Brennkraftmaschine fest verbundenes Abtriebselement. Die Nockenwelle kann zur Betätigung der Einlass- oder Auslassventile der Brennkraftmaschine, beispielsweise eines Otto- oder Dieselmotors, vorgesehen sein.

Ortsfest an der Brennkraftmaschine befindet sich ein Signalgenerator, mit welchem ein Messkreis induktiv gekoppelt ist, der in das als Ganzes rotierbare Verstellmodul integriert ist Durch die Messanordnung, welche den Signalgenerator und den Messkreis umfasst, ist mindestens ein Schwingkreis gebildet. Mindestens eine auf Seiten des Messkreises, das heißt im oder am Verstellmodul, befindliche Schwingkreiskomponente weist elektrische Eigenschaften auf, die vom Phasenwinkel zwischen Nockenwelle und Kurbelwelle der Brennkraftmaschine abhängen.

Die Einstellung des Nockenwellenverstellers wird somit mit einer Messanordnung detektiert, welche einen feststehenden Teil und einen rotierenden Teil umfasst, wobei ausschließlich der feststehende Teil eine leitungsgebundene Stromzuführung aufweist. Der rotierende Teil umfasst zwei relativ zueinander verschwenkbare Baugruppen, nämlich einerseits das Antriebselement des Nockenwellenverstellers und andererseits die Nockenwelle sowie fest mit dieser verbundene Komponenten. Die Detektion des zwischen den beiden Baugruppen eingeschlossenen Winkels ist mit der Detektion der Einstellung des Nockenwellenverstellers gleichbedeutend. Eine Erfassung der Winkelstellung der Kurbelwelle ist zur Bestimmung der Einstellung des Nockenwellenverstellers nicht erforderlich, kann jedoch optional vorhanden sein.

Die auf Seiten des insgesamt rotierbaren Verstellmoduls angeordnete Schwingkreiskomponente mit vom Phasenwinkel zwischen Nockenwelle und Kurbelwelle abhängigen elektrischen Eigenschaften kann in Form einer Spule mit variabler Induktivität gegeben sein. Zusätzlich oder alternativ kann das Verstellmodul auch einen Widerstand oder eine Kapazität mit veränderbaren elektrischen Eigenschaften aufweisen. In allen Fallen hängen die elektrischen Eigenschaften des betreffenden Bauteils von der Winkelstellung zwischen Antriebselement und Abtriebselement des Verstellmoduls, das heißt von der Einstellung des Nockenwellenverstellers, ab. Die in das Verstellmodul integrierte Schwingkreiskomponente oder Schwingkreiskomponenten wirkt beziehungsweise wirken auf den ortsfesten Signalgenerator zurück. Insbesondere ist die Kopplungsintensität zwischen einer ortsfesten Spule der Messanordnung und einer rotierenden Spule von der Frequenz sowie von der eingestellten Induktivität auf dem rotierenden Teil der Messanordnung abhängig. Auswertbar sind insbesondere Signaldämpfung und Phasenlage. Eine Änderung der Induktivität auf Seiten des Verstellmoduls führt zu einer Änderung der Frequenz, bei welcher die stärkste Dämpfung auftritt. Somit kann durch die Erfassung eines vom rotierenden Teil der Messanordnung zum feststehenden Teil der Messanordnung rückgekoppeltes Signal eindeutig auf die Einstellung des Nockenwellenverstellers geschlossen werden. Dies gilt sowohl beim Betrieb der Brennkraftmaschine, das heißt bei rotierender Nockenwelle, als auch bei stehender Kurbelwelle.

Dokument WO 2005/111383 A1 offenbart eine Hysteresebremse, insbesondere für einen elektrischen Nockenwellensteller, mit einer Erregerspule, einem Stator mit einem inneren und äusseren Statorteil und einem beweglichen Rotor mit Hystereseband welches zwischen dem inneren und äusseren Statorteil bewegbar ist, wobei die Erregerspule zur Erzeugung eines magnetischen Hauptflusses für einen Magnetsteller zwischen dem inneren und äusseren Statorteil.

Zum technischen Hintergrund wird auf die DE 10 2012 215 957 A1, die ein kompaktes Resolverlager zeigt, sowie auf die WO 2011/134955 A2, welche eine Wälzlageranordnung mit einem Winkelsensor betrifft, verwiesen. Ferner sei zum technischen Hintergrund auf die DE 10 2008 039 376 B4 verwiesen, welche eine Vorrichtung zur induktiven Abtastung der Teilstriche eines mechanischen Rollenzählwerks offenbart.

Gemäß einer bevorzugten Ausgestallung umfasst der Messkreis, weicher auf Seiten des Verstellmoduls angeordnet ist, zwel in Reihe geschaltete Induktivitäten Hierbei weist eine erste Induktivität variable, von der Einstellung des Nockenwellenverstellers abhängige Eigenschaften auf während eine zweite Induktivität nicht variierbar ist und ausschließlich der induktiven Kopplung zwischen Messkreis und Signalgenerator dient. Ebenso wie die zweite Induktivität ist auch eine ortsfeste Induktivität, welche dem Signalgenerator zuzurechnen ist, nicht variierbar. Die ortsfeste Induktivität und die auf Seiten des Verstellmoduls angeordnete zweite Induktivität sind geometrisch vorzugsweise derart gestaltet, dass geringe Änderungen des Abstands zwischen stehenden und rotierenden Teilen der Messanordnung oder Exzentritäten zwischen den betreffenden Teilen kaum Einfluss auf die elektrischen Eigenschaften des Schwingkreises haben. Dies ist beispielsweise dadurch erreichbar, dass eine der beiden genannten Spulen einen kleineren Durchmesser als die andere Spule aufweist, sodass eine Verschiebung der kleineren Spule relativ zur größeren Spule kaum Einfluss auf die Kopplung zwischen den Spulen hat.

Die Schwingkreiskomponente, insbesondere Spule, elektrischer Widerstand oder Kapazität, deren elektrische Eigenschaften von der Einstellung des Nockenwellenverstellers abhängig sind, kann aus mehreren Subkomponenten gebildet sein, wobei eine erste Subkomponente fest mit dem Antriebselement des Verstellmoduls und eine zweite Subkomponente fest mit dem Abtriebselement des Verstellmoduls verbunden ist. Im Fall einer verstellbaren Spule als Schwingkreiskomponente mit variierbaren Eigenschaften ist eine der Subkomponenten als stromführende Komponente und die andere Subkomponente als nicht stromführende Komponente ausgebildet.

Gemäß einer ersten möglichen Ausgestaltung der variablen Induktivität handelt es sich bei der stromführenden Subkomponente um eine Spule mit räumlicher Struktur und bei der nicht stromführenden Subkomponente um einen in diese Spule eintauchenden, relativ zur Spule verschwenkbaren Eisenkern.

Gemäß einer zweiten möglichen Ausgestaltung der variablen Induktivität ist die stromführende Subkomponente als im Wesentlichen flächiges Gebilde, insbesondere als sogenannte gedruckte Schaltung, ausgeführt, während es sich bei der nicht stromführenden Subkomponente um einen Blechring handelt, welcher relativ zur beispielsweise als gedruckte Schaltung oder als bestückte Leiterplatte vorliegenden Spule verschwenkbar ist und mindestens einen Abschnitt mit in Umfangsrichtung des Blechrings variabler Breite aufweist. Hierbei liegen die Spule und der Blechring in zueinander parallelen Ebenen. Prinzipiell ist eine Verbundplatine mit bestrombaren Windungen, welche als Spule fungieren, beispielsweise aus der EP 2225 816 B1 bekannt.

Als Aktor des Nockenwellenverstellers ist in bevorzugter Ausgestaltung ein Elektromotor vorgesehen. Die dem Signalgenerator zuzurechnende ortsfeste Induktivität ist vorzugsweise an einer Stirnseite des Gehäuses des Elektromotors befestigt. Das vom Elektromotor als Aktor betätigbare Verstellmodul ist vorzugsweise als Drei-Wellen-Getriebe ausgebildet, wobei die Schwingkreiskomponente mit variablen elektrischen Eigenschaften vorzugsweise an der dem Elektromotor zugewandten Stirnseite des Getriebegehäuses des Drei-Wellen-Getriebes angeordnet ist.

Von besonderem Vorteil ist die Tatsache, dass mit Hilfe des erfindungsgemäßen Verfahrens der Winkel zwischen zwei zueinander verschwenkbaren, miteinander rotierbaren Elementen, nämlich zwischen dem Antriebselement und dem Abtriebselement des Verstellmoduls, messbar ist, unabhängig davon, ob und gegebenenfalls mit welcher Drehzahl die beiden genannten Elemente miteinander rotieren. Die vom ortsfesten Teil der Messanordnung aus detektierbaren Eigenschaften der rotierbaren Elemente sind ausschließlich von der Winkellage der beiden rotierbaren Elemente zueinander, nicht jedoch von der Winkellage oder vom Bewegungszustand der Anordnung aus den rotierbaren Elementen insgesamt abhängig.

Nachfolgend werden mehrere Ausführungsbeispiele der Erfindung anhand einer Zeichnung näher erläutert. Hierin zeigen:
- Fig. 1: einen Nockenwellenversteller mit elektrischem Aktor und Vorrichtung zur Messung des Phasenwinkels zwischen Kurbelwelle und Nockenwelle,
- Fig. 2: verschiedene Ausführungsformen einer verstellbaren, für die Anordnung nach Fig. 1 geeigneten Induktivität,
- Fig. 3 bis 5: verschiedene Schaltungsvarianten von Schwingkreisen für die Anordnung nach Fig. 1.

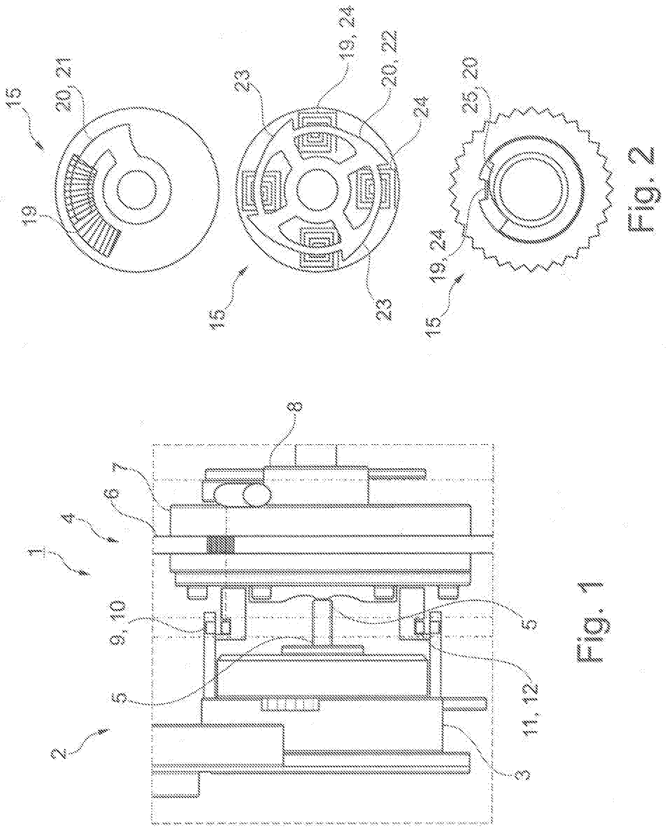

In Fig. 1 ist ein insgesamt mit dem Bezugszeichen 1 gekennzeichneter Nockenwellenversteller skizziert, hinsichtlich dessen grundsätzlicher Funktionalität beispielhaft auf die DE 10 2008 039 009 A1 sowie auf die DE 10 2011 083 800 A1 verwiesen wird.

Der Nockenwellenversteller 1 umfasst einen Aktor 2, nämlich einen Elektromotor mit einem ortsfesten Gehäuse 3, sowie ein Verstellmodul 4, auch als Verstellgetriebe bezeichnet, welches als Drei-Wellen-Getriebe ausgebildet ist. Eine mit dem Bezugszeichen 5 gekennzeichnete Welle ist mit der Motorwelle des Elektromotors 2 sowie mit einer Verstellwelle des Verstellmoduls 4 fest verbunden oder mit mindestens einer dieser Motor- oder Getriebewellen identisch. Als Antriebselement 6 des Verstellmoduls 4 fungiert ein Zahnrad, welches mit einem Getriebegehäuse 7 des Verstellmoduls 4 fest verbunden ist. Ein mit 8 bezeichnetes Abtriebselement des Verstellmoduls 4 ist fest mit einer Nockenwelle einer Brennkraftmaschine verbunden und rotiert mit der Drehzahl des Antriebselementes 6, solange auch die Welle 5 mit derselben Drehzahl rotiert. Weicht dagegen die Drehzahl der Welle 5 von der Drehzahl des Antriebselementes 6 ab, so wird das Abtriebselement 8 mit einem hohen Untersetzungsverhältnis verstellt. Dieser Verstellvorgang stellt eine Verstellung des Phasenwinkels der Nockenwelle in Relation zur Kurbelwelle derselben, nicht weitergezeigten Brennkraftmaschine dar. Das Verstellgetriebe 4 ist beispielsweise als Taumelscheibengetriebe oder als Wellgetriebe gestaltet.

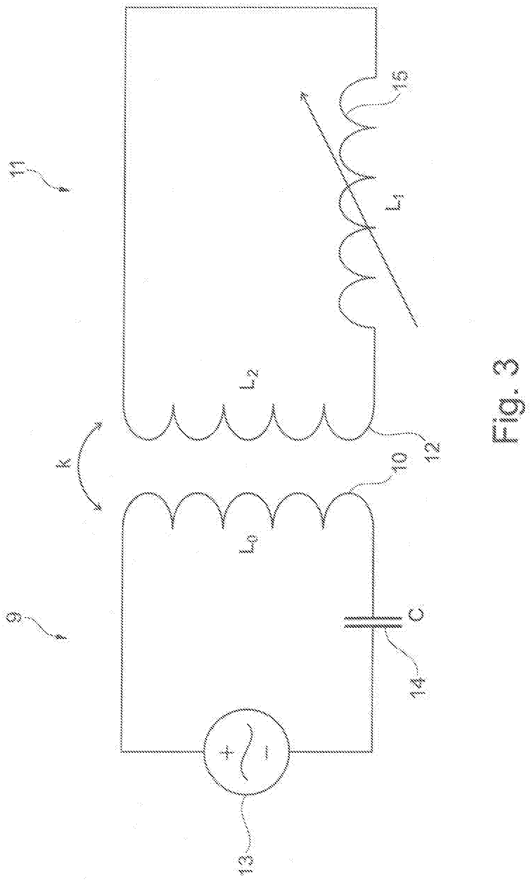

Am Gehäuse 3 des Elektromotors 2 sind Komponenten eines insgesamt mit dem Bezugszeichen 9 gekennzeichneten Signalgenerators befestigt. In Fig. 1 ist eine Signalgeneratorspule 10 angedeutet, deren Induktivität L₀ beträgt (vergleiche Fig. 3 bis 5). Die Signalgeneratorspule 10 befindet sich auf der dem Verstellmodul 4 zugewandten Stirnseite des Elektromotors 2. Weitere Komponenten des Signalgenerators 9-können sich beispielsweise innerhalb des Gehäuses 3 oder an anderer Stelle ortsfest relativ zur den Nockenwellenversteller 1 aufweisenden Brennkraftmaschine befinden.

Eine induktive Kopplung ist gegeben zwischen der Signalgeneratorspule 10 und einem in das Verstellmodul 4 integrierten Messkreis 11, von welchem in Fig. 1 eine Übertragungsspule 12 erkennbar ist. In der vereinfachten Darstellung nach Fig. 1 befindet sich die Übertragungsspule 12 radial innerhalb der Signalgeneratorspule 10. Ebenso könnten sich die Signalgeneratorspule 10 und die Übertragungsspule 12 in einander benachbarten Ebenen befinden. In jedem Fall beträgt der Abstand zwischen den genannten Spulen 10,12 höchstens wenige Millimeter.

Mögliche Gestaltungen des Signalgenerators 9 sowie des Messkreises 11, welche in den Nockenwellenversteller 1 nach Fig. 1 integrierbar sind, sind in den Figuren 3 bis 5 dargestellt. Durch diese Gestaltungen sind Schwingkreise realisiert, wobei in allen Fällen eine leitungsgebundene Stromzuführung ausschließlich zu feststehenden Teilen des Nockenwellenverstellers 1 vorgesehen ist. Elektrische Energie wird jeweils von einem Frequenzgenerator 13 geliefert, der Teil des Signalgenerators 9 ist und ein variierbares elektrisches Signal in der Größenordnung von einigen kHz bis MHz generiert. Die Kopplung zwischen dem Signalgenerator 9 und dem Messkreis 11 ist durch einen mit k beschrifteten Doppelpfeil veranschaulicht.

Im Ausführungsbeispiel nach Fig. 3 umfasst der Signalgenerator 9 zusätzlich zur Signalgeneratorspule 10 einen Kondensator 14 mit einer Kapazität C, womit bereits ein vollständiger Schwingkreis gebildet ist. Die Eigenschaften dieses Schwingkreises werden mit beeinflusst durch den Messkreis 11, welcher zusätzlich zur Übertragungsspule 12 eine Verstellspule 15 aufweist. Die Induktivität der Verstellspule 15 ist als erste Induktivität L₁, die Induktivität der Übertragungsspule 12 als zweite Induktivität L₂ bezeichnet. Der Betrag der ersten Induktivität L₁ ist von der Winkelstellung zwischen dem Antriebselement 6 und dem Abtriebselement 8 des Verstellmoduls 4, das heißt von der Einstellung des Nockenwellenverstellers 1, abhängig, worauf anhand Fig. 2 noch näher eingegangen werden wird. Aufgrund der Kopplung k ist eine Rückkopplung zwischen dem Messkreis 11 und dem Signalgenerator 9 gegeben, welche von der Einstellung des Nockenwellenverstellers 1 abhängt. Insbesondere ist im die Signalgeneratorspule 10 umfassenden Schwingkreis eine von der Frequenz abhängige Dämpfung feststellbar, wobei die Frequenz, bei welcher die stärkste Dämpfung auftritt, von den elektrischen Eigenschaften des Messkreises 11, insbesondere vom Betrag der ersten Induktivität L₁, abhängig ist.

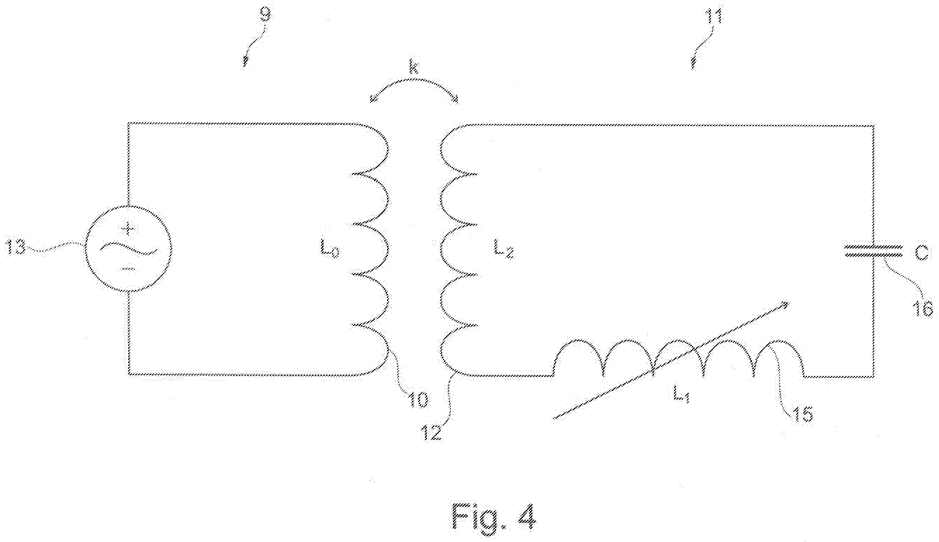

Die Messanordnung nach Fig. 4 unterscheidet sich von der Messanordnung 3 dadurch, dass der den Frequenzgenerator 13 umfassende Stromkreis keine Kapazität als gesondertes Bauteil aufweist, während stattdessen ein Kondensator 16 Teil des Messkreises 11 ist. Weiterhin sind, ebenso wie im Ausführungsbeispiel nach Fig. 3, eine Übertragungsspule 12 sowie eine Verstellspule 15 Komponenten der Anordnung zur Messung der Einstellung des Nockenwellenverstellers 1 gemäß Figur 4.

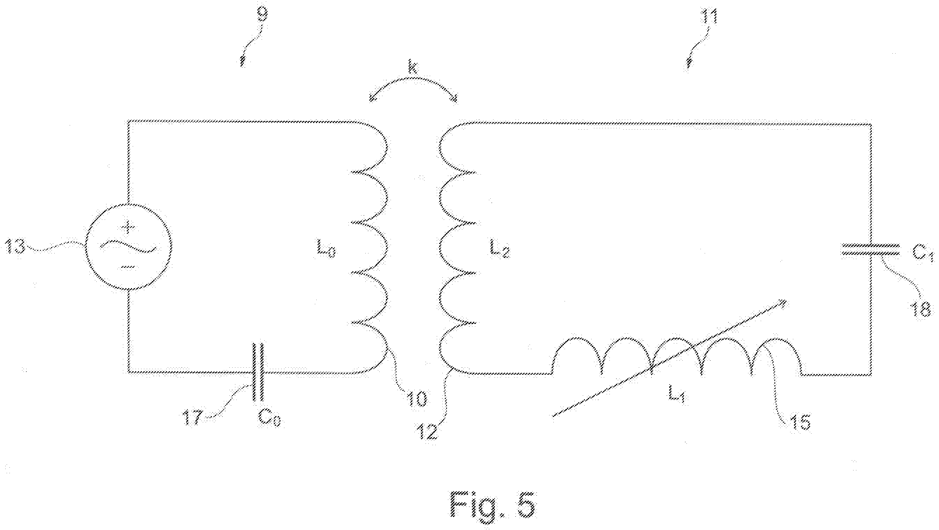

Das Ausführungsbeispiel nach Fig. 5 kombiniert Merkmale der Ausführungsbeispiele nach Fig. 3 und Fig. 4 und umfasst Kondensatoren 17,18 mit einer Kapazität C₀ beziehungsweise C₁, welche sich in dem die Signalgeneratorspule 10 beziehungsweise die Übertragungsspule 12 aufweisenden Stromkreis befinden.

In jeder der Bauformen nach den Fig. 3 bis 5 ist die Verstellspule 15 als Schwingkreiskomponente mit vom Phasenwinkel zwischen Nockenwelle und Kurbelwelle abhängigen elektrischen Eigenschaften vorgesehen. Alternativ hierzu könnte beispielsweise auch eine Kapazität C,C₁ oder ein nicht dargestellter Widerstand innerhalb des Messkreises 11 vom Verdrehwinkel zwischen dem Antriebselement 6 und dem Abtriebselement 8 des Verstellmoduls 4 abhängige elektrische Eigenschaften aufweisen. Ebenso sind Ausführungsformen realisierbar, bei welchen mehrere Komponenten des Messkreises 11 derart verstellbar sind, dass ein von der Einstellung des Nockenwellenverstellers 1 abhängiges Signal zu den ortsfesten Komponenten der Messanordnung rückgekoppelt wird.

In Fig. 2 sind drei mögliche Varianten der Verstellspule 15 skizziert, welche wahlweise in den Nockenwellenversteller 1 nach Fig. 1 einbaubar und in jede der Schaltungsanordnungen nach den Fig. 3 bis 5 integrierbar sind. Die Verstellspule 15 umfasst in allen Fällen eine stromführende Komponente 19 - die Spule im engeren Sinne - als erste Subkomponente und eine nicht stromführende Komponente 20 als zweite Subkomponente, welche die Eigenschaften der ersten Subkomponente 19 beeinflusst.

Gemäß der in Fig. 2 oben skizzierten Bauform der Verstellspule 15 handelt es sich bei der ersten, stromführenden Komponente 19 um eine Spule mit räumlicher Struktur, in welche ein verschwenkbarer Eisenkern 21 als nicht stromführende Konponente 20 eintaucht. Hierbei sind die Subkomponenten 19,20 fest mit dem Antriebselement 6 beziehungsweise mit dem Abtriebselement 8 des Nockenwellenverstellers 1 verbunden, sodass der Winkel zwischen den Subkomponenten 19,20 den Winkel zwischen den genannten Elementen 6,8 und damit die Einstellung des Nockenwellenverstellers 1 Wiedergibt. Abweichend von der vereinfachten Darstellung in Fig. 2 oben könnte die stromführende Komponente 19 auch in Form mehrerer einzelner Spulen realisiert sein, in welche jeweils ein gesonderter Eisenkern 21 eintauchen kann, wobei die Anordnung aus sämtlichen Eisenkernen 21 die zweite Subkomponente 20 bildet.

Eine entsprechende Funktionalität weist die in Fig. 2 in der Mitte skizzierte Bauform der Verstellspule 15 auf. In diesem Fall ist die stromführende Komponente 19 der Verstellspule 15, das heißt die Spule im engeren Sinne, als gedruckte Schaltung realisiert. Die damit im Wesentlichen in einer Ebene liegende erste Subkomponente 19 ist parallel zu einem Blechring 22 angeordnet, welcher analog zum Eisenkern 21 als zweite, nicht stromführende Komponente 20 fungiert. Der Blechring 22 weist vier ineinander übergehende, sich jeweils über 90 Grad erstreckende Segmente 23 auf, welche jeweils eine in Umfangsrichtung des Blechrings 22 variierende Breite haben. Die Segmente 23 wirken zusammen mit vier Einzelspulen 24, welche zusammen die als gedruckte Schaltung ausgebildete stromführende Komponente 19 der Verstellspule 15 bilden. Diese Bauform der Verstellspule 15 zeichnet sich durch einen besonders flachen Aufbau in axialer Richtung des Nockenwellenverstellers 1 und damit durch einen äußerst geringen Raumbedarf an der dem Aktor 2 zugewandten Stirnseite des Verstellmoduls 4 aus.

Die in Fig. 2 unten skizzierte Bauform der Verstellspule 15 weist lediglich eine einzige stromführende Komponente 19 auf, welche mit einem Keil 25 der nicht stromführenden Komponente 20 zusammenwirkt. Hierbei befindet sich die stromführende Komponente 19, nämlich Einzelspule 24, radial außerhalb des Keils 25 der insgesamt ringförmigen nicht stromführenden Komponente 20. Abweichend von der dargestellten Bauform könnten auch mehrere, beispielsweise vier oder sechs, Einzelspulen 24 vorgesehen sein, welchen jeweils ein Keil 25, welcher sich beispielsweise über einen Winkel von maximal 90° beziehungsweise maximal 60° erstreckt, gegenüberliegt.

### Bezugszeichenliste

- C: Kapazität
- C₀: Kapazität
- C₁: Kapazität
- k: Kopplung
- L₀: Induktivität
- L₁: Induktivität
- L₂: Induktivität

- 1: Nockenwellenversteller
- 2: Aktor, Elektromotor
- 3: Gehäuse
- 4: Verstellmodul
- 5: Welle
- 6: Antriebselement
- 7: Getriebegehäuse
- 8: Abtriebselement
- 9: Signalgenerator
- 10: Signalgeneratorspule
- 11: Messkreis
- 12: Übertragungsspule
- 13: Frequenzgenerator
- 14: Kondensator
- 15: Verstellspule
- 16: Kondensator
- 17: Kondensator
- 18: Kondensator
- 19: stromführende Komponente, erste Subkomponente
- 20: nicht stromführende Komponente, zweite Subkomponente
- 21: Eisenkern
- 22: Blechring
- 23: Segment
- 24: Einzelspule
- 25: Keil

## Patentansprüche

1. Nockenwellenversteller (1) zur Verstellung des Phasenwinkels zwischen einer Kurbelwelle und einer Nockenwelle einer Brennkraftmaschine, mit einem Aktor (2) und einem Verstellmodul (4), welches ein durch die Kurbelwelle antreibbares Antriebselement (6) sowie ein zu diesem beschränkt verdrehbares, zur festen Kopplung mit der Nockenwelle vorgesehenes Abtriebselement (8) umfasst, **gekennzeichnet durch** einen eine Induktivität (L₀) aufweisenden, ortsfest an der Brennkraftmaschine angeordneten Signalgenerator (9) sowie einen induktiv mit diesem gekoppelten, in das Verstellmodul (4) integrierten Messkreis (11), welcher mindestens eine Schwingkreiskomponente (15) mit vom genannten Phasenwinkel abhängigen elektrischen Eigenschaften aufweist.

2. Nockenwellenversteller (1) nach Anspruch 1, **dadurch gekennzeichnet, dass** als Schwingkreiskomponente (15) mit vom Phasenwinkel abhängigen elektrischen Eigenschaften eine erste Induktivität (L₁) vorgesehen ist.

3. Nockenwellenversteller (1) nach Anspruch 2, **dadurch gekennzeichnet, dass** eine zweite Induktivität (L₂) zur ersten Induktivität (L₁) in Reihe geschalten ist, wobei die zweite Induktivität (L₂) nicht variierbar ist, und wobei ausschließlich die zweite Induktivität (L₂) zur Kopplung zwischen Messkreis (11) und Signalgenerator (9) vorgesehen ist.

4. Nockenwellenversteller (1) nach einem der Ansprüche 1 bis 3, **dadurch gekennzeichnet, dass** eine erste Subkomponente (19,20)) der Schwingkreiskomponente (15) fest mit dem Antriebselement (6) und eine zweite Subkomponente (20,19) der Schwingkreiskomponente (15) fest mit dem Abtriebselement (8) verbunden ist.

5. Nockenwellenversteller (1) nach Anspruch 4, **dadurch gekennzeichnet, dass** eine der Subkomponenten (19,20) als stromführende Komponente (19) und die andere Subkomponente (19,20) als nicht stromführende Komponente (20) ausgebildet ist.

6. Nockenwellenversteller (1) nach Anspruch 5, **dadurch gekennzeichnet, dass** die stromführende Subkomponente (19) als Spule mit räumlicher Struktur und die nicht stromführende Subkomponente (20) als in die Spule eintauchender, relativ zur Spule verschwenkbarer Eisenkern (21) ausgebildet ist.

7. Nockenwellenversteller (1) nach Anspruch 5, **dadurch gekennzeichnet, dass** die stromführende Subkomponente (19) als in Form einer gedruckten Schaltung realisierte Spule und die nicht stromführende Subkomponente (20) als relativ zur Spule verschwenkbarer, parallel zur Spule angeordneter, eine in Umfangsrichtung variierende Breite aufweisender Blechring (22) ausgebildet ist.

8. Nockenwellenversteller (1) nach einem der Ansprüche 1 bis 7, **dadurch gekennzeichnet, dass** als Aktor (2) ein Elektromotor vorgesehen und eine orstfeste Induktivität (L₀) an dessen Gehäuse befestigt ist.

9. Nockenwellenversteller (1) nach Anspruch 8, **dadurch gekennzeichnet, dass** das Verstellmodul (4) als Drei-Wellen-Getriebe ausgebildet ist, wobei die variable Eigenschaften aufweisende Schwingkreiskomponente (15) stirnseitig an einem Getriebegehäuse (7) des Drei-Wellen-Getriebes angeordnet ist.

10. Verfahren zur Messung der Einstellung eines zur Verstellung des Phasenwinkels zwischen einer Kurbelwelle und einer Nockenwelle einer Brennkraftmaschine ausgebildeten Nockenwellenverstellers (1), mit folgenden Merkmalen:
- Eine ortsfest relativ zur Brennkraftmaschine angeordnete Induktivität (L₀) wird mit einem Signal beaufschlagt,
- durch die Signalbeaufschlagung der Induktivität (L₀) wird eine induktive Kopplung mit einem Messkreis (11) hergestellt, welcher vollständig durch rotierbare Komponenten des Nockenwellenverstellers (1) gebildet ist, wobei elektrische Eigenschaften des Messkreises (11) von der Einstellung des Nockenwellenverstellers (1) abhängig sind,
- mittels der ortsfesten Induktivität (L₀) wird ein rückgekoppeltes, von der Einstellung des Nockenwellenverstellers (1) abhängiges Signal aufgenommen.

## Claims

1. Camshaft adjuster (1) for adjusting the phase angle between a crankshaft and a camshaft of an internal combustion engine, having an actuator (2) and having an adjustment module (4) which comprises a drive element (6), which can be driven by the crankshaft, and an output element (8), which is rotatable relative to said drive element to a limited extent and which is provided for fixed coupling to the camshaft, **characterized by** a signal generator (9), which has an inductance (L₀) and which is arranged positionally fixedly on the internal combustion engine, and a measurement circuit (11), which is inductively coupled to said signal generator and which is integrated into the adjustment module (4) and which has at least one oscillatory circuit component (15) with electrical characteristics that are dependent on the stated phase angle.

2. Camshaft adjuster (1) according to Claim 1, **characterized in that**, as an oscillatory circuit component (15) with electrical characteristics that are dependent on the phase angle, a first inductance (L₁) is provided.

3. Camshaft adjuster (1) according to Claim 2, **characterized in that** a second inductance (L₂) is connected in series with the first inductance (L₁), wherein the second inductance (L₂) is not variable, and wherein only the second inductance (L₂) is provided for the coupling between measurement circuit (11) and signal generator (9).

4. Camshaft adjuster (1) according to one of Claims 1 to 3, **characterized in that** a first subcomponent (19, 20) of the oscillatory circuit component (15) is fixedly connected to the drive element (6), and a second subcomponent (20, 19) of the oscillatory circuit component (15) is fixedly connected to the output element (8).

5. Camshaft adjuster (1) according to Claim 4, **characterized in that** one of the subcomponents (19, 20) is formed as a current-conducting component (19), and the other subcomponent (19, 20) is formed as a non-current-conducting component (20).

6. Camshaft adjuster (1) according to Claim 5, **characterized in that** the current-conducting subcomponent (19) is formed as a coil with a three-dimensional structure, and the non-current-conducting subcomponent (20) is formed as an iron core (21) which protrudes into the coil and which is pivotable relative to the coil.

7. Camshaft adjuster (1) according to Claim 5, **characterized in that** the current-conducting subcomponent (19) is formed as a coil realized in the form of a printed circuit, and the non-current-conducting subcomponent (20) is formed as a sheet-metal ring (22) which is pivotable relative to the coil and which is arranged parallel to the coil and which has a width which varies in a circumferential direction.

8. Camshaft adjuster (1) according to one of Claims 1 to 7, **characterized in that** an electric motor is provided as an actuator (2), and a positionally fixed inductance (L₀) is fastened to the housing thereof.

9. Camshaft adjuster (1) according to Claim 8, **characterized in that** the adjustment module (4) is formed as a three-shaft gearing, wherein the oscillatory circuit component (15) that has variable characteristics is arranged at a face side on a gearing housing (7) of the three-shaft gearing.

10. Method for measuring the setting of a camshaft adjuster (1) designed for the adjustment of the phase angle between a crankshaft and a camshaft of an internal combustion engine, having the following features:
- an inductance (L₀) arranged positionally fixedly relative to the internal combustion engine has a signal applied thereto,
- as a result of the application of the signal to the inductance (L₀), an inductive coupling to a measurement circuit (11) is produced, which measurement circuit is formed entirely by rotatable components of the camshaft adjuster (1), wherein electrical characteristics of the measurement circuit (11) are dependent on the setting of the camshaft adjuster (1),
- a fed-back signal which is dependent on the setting of the camshaft adjuster (1) is recorded by means of the positionally fixed inductance (L₀).

## Revendications

1. Déphaseur d'arbre à cames (1) pour le réglage de l'angle de phase entre un vilebrequin et un arbre à cames d'un moteur à combustion interne, avec un actionneur (2) et un module de réglage (4), qui comprend un élément d'entraînement (6) pouvant être entraîné par le vilebrequin ainsi qu'un élément de sortie (8) pouvant tourner de façon limitée par rapport à celui-ci et prévu pour le couplage solidaire avec l'arbre à came, **caractérisé par** un générateur de signaux (9) présentant une inductance (L₀) disposée de façon fixe sur le moteur à combustion interne ainsi qu'un circuit de mesure (11) couplé par induction à celui-ci et intégré dans le module de réglage (4), qui présente au moins un composant de circuit oscillant (15) avec des propriétés électriques dépendant de l'angle de phase précité.

2. Déphaseur d'arbre à cames (1) selon la revendication 1, **caractérisé en ce qu'**il est prévu une première inductance (L₁) comme composant de circuit oscillant (15) avec des propriétés électriques dépendant de l'angle de phase.

3. Déphaseur d'arbre à cames (1) selon la revendication 2, **caractérisé en ce qu'**une deuxième inductance (L₂) est montée en série avec la première inductance (L₁), dans lequel la deuxième inductance (L₂) n'est pas variable, et dans lequel la deuxième inductance (L₂) est prévue exclusivement pour le couplage entre le circuit de mesure (11) et le générateur de signaux (9).

4. Déphaseur d'arbre à cames (1) selon l'une quelconque des revendications 1 à 3, **caractérisé en ce qu'**un premier sous-composant (19, 20) du composant de circuit oscillant (15) est attaché à l'élément d'entraînement (6) et un deuxième sous-composant (20, 19) du composant de circuit oscillant (15) est attaché à l'élément de sortie (8).

5. Déphaseur d'arbre à cames (1) selon la revendication 4, **caractérisé en ce qu'**un des sous-composants (19, 20) est un composant conducteur du courant (19) et l'autre sous-composant (19, 20) est un composant non conducteur du courant (20).

6. Déphaseur d'arbre à cames (1) selon la revendication 5, **caractérisé en ce que** le sous-composant conducteur du courant (19) est réalisé sous la forme d'une bobine avec une structure spatiale et le sous-composant non conducteur du courant (20) est réalisé sous la forme d'un noyau de fer (21) plongeant dans la bobine et pouvant pivoter par rapport à la bobine.

7. Déphaseur d'arbre à cames (1) selon la revendication 5, **caractérisé en ce que** le sous-composant conducteur du courant (19) est constitué par une bobine réalisée sous la forme d'un circuit imprimé et le sous-composant non conducteur du courant (20) est constitué par un anneau de tôle (22) pouvant pivoter par rapport à la bobine, disposé parallèlement à la bobine et présentant une largeur variant dans la direction périphérique.

8. Déphaseur d'arbre à cames (1) selon l'une quelconque des revendications 1 à 7, **caractérisé en ce qu'**il est prévu comme actionneur (2) un moteur électrique et une inductance stationnaire (L₀) est fixée sur le corps de ce dernier.

9. Déphaseur d'arbre à cames (1) selon la revendication 8, **caractérisé en ce que** le module de réglage (4) est constitué par une boîte de vitesses à trois arbres, dans lequel le composant de circuit oscillant (15) présentant des propriétés variables est disposé frontalement sur un carter de boîte de vitesses (7) de la boîte de vitesses à trois arbres.

10. Procédé de mesure de la position d'un déphaseur d'arbre à cames (1) pour le réglage de l'angle de phase entre un vilebrequin et un arbre à cames d'un moteur à combustion interne, présentant les caractéristiques suivantes:
- on envoie un signal à une inductance (L₀) disposée de façon stationnaire par rapport au moteur à combustion interne,
- par l'envoi d'un signal à l'inductance (L₀), on établit un couplage inductif avec un circuit de mesure (11), qui est formé entièrement par des composants rotatifs du déphaseur d'arbre à cames (1), dans lequel des propriétés électriques du circuit de mesure (11) dépendent de la position du déphaseur d'arbre à cames (1),
- on enregistre au moyen de l'inductance fixe (L₀) un signal réinjecté dépendant de la position du déphaseur d'arbre à cames (1).
